# EUROPÄISCHE PATENTSCHRIFT

(11) **EP 3 834 957 B1**
(45) Veröffentlichungstag und Bekanntmachung des Hinweises auf die Patenterteilung: **29.01.2025**
(21) Anmeldenummer: 20212659.5
(22) Anmeldetag: 09.12.2020
(51) Int. Cl.: B21D 39/03, G05B 19/00

(54) **VERFAHREN ZUM FÜGEN ZWEIER BLECHE MIT EINER VARIABLEN GESAMTDICKE**
METHOD FOR JOINING TWO SHEETS WITH A VARIABLE TOTAL THICKNESS
PROCÉDÉ D'ASSEMBLAGE DE DEUX TÔLES D'UNE ÉPAISSEUR TOTALE VARIABLE

(30) Priorität: 11.12.2019 DE 102019134024
(43) Veröffentlichungstag der Anmeldung: 16.06.2021
(73) Patentinhaber: Eckold GmbH & Co. KG, 37444 St. Andreasberg (DE)
(72) Erfinder: Florian, Unger, 37431 Bad Lauterberg (DE)
(74) Vertreter: Gramm, Lins & Partner Patent- und Rechtsanwälte PartGmbB

(56) Entgegenhaltungen:
- DE-A1- 102015 016 957
- US-A1- 2001 002 506

## Beschreibung

Die Erfindung betrifft ein Verfahren zum Fügen mindestens zweier aufeinander aufliegender Bleche mit einer variablen Gesamtdicke mittels einer Clinchvorrichtung, die zumindest einen Stempel und eine koaxial hierzu angeordnete Matrize aufweist, und zumindest der Stempel über eine elektronische Steuerung ansteuerbar in einer axialen Richtung relativ zur Matrize verfahrbar angeordnet ist, wobei die beiden Bleche in einer Ebene zwischen dem Stempel und der Matrize angeordnet sind, und die zum Fügen der Bleche notwendige Durchsetztiefe einstellbar ist, wobei vor dem Fügen der Bleche mit Hilfe der Steuerung die aktuelle Gesamtdicke ermittelt und in Abhängigkeit der Gesamtdicke die Durchsetztiefe eingestellt wird.

Ein solches Verfahren ist beispielsweise aus der EP 3 020 498 B1 bekannt. Ein ähnliches Verfahren ist aus der DE 20 2019 104 412 U1 bekannt.

Um zwei aufeinander liegende Bleche durch Umformung zu verbinden, werden diese aufeinanderliegend zwischen den Stempel und die Matrize gelegt. Die Summe der Blechdicken der ersten und zweiten Bleche ergibt die Gesamtdicke, die in Abhängigkeit der verwendeten Bleche also variable ist. Der Stempel wird auf die Bleche herabgefahren und aufgedrückt und drückt das Material in die Matrize bzw. in den durch die Matrize und einen Amboss gebildeten Hohlraum. Um den Hohlraum zu vergrößern, damit das verdrängte Material aufgenommen werden kann, sind in aller Regel mehrere Matrizensegmente vorgesehen, die sich während des Umformprozesses quer zur Hochachse des Grundkörpers verschieben können. Der Amboss ist in den Grundkörper eingepresst.

Zum Erreichen einer hinsichtlich Haltekraft und/oder optischem Erscheinungsbild optimal ausgebildeten Verbindung ist es notwendig, jeder Fügeaufgabe, die insbesondere durch die Blechdicken, die Blechwerkstoffe, die Blechoberflächen und/oder die Fügerichtung definiert wird, eine Matrize mit einer speziell angepassten Matrizentiefe zuzuordnen, die die Durchsetztiefe bestimmt. Vielfach sind an einem Bauteil aber mehrere unterschiedliche Fügeaufgaben zu erledigen. In der betrieblichen Anwendung ist man dann vor allem aus Kostengründen daran interessiert, möglichst viele Fügeaufgaben mit derselben Matrize zu realisieren, da sich dadurch die Anzahl der notwendigen Fügegeräte und somit vor allem die zu deren Anschaffung anfallenden Investitionskosten reduzieren lassen.

Wenn die Tiefe der Matrize festgelegt ist, können unterschiedliche Fügeaufgaben nur dann mit derselben Matrize ausgeführt werden, wenn diese entsprechend ausgemittelt ist, indem Kompromisse akzeptiert werden. Eine Kompromiss-Matrizentiefe ermöglichst die angestrebte Reduzierung der Anzahl notwendiger Antriebsgeräte, bringt jedoch den Nachteil mit sich, dass meist keine der realisierten Fügeaufgaben eine hinsichtlich Optik und/oder Haltekraft optimale Ausprägung aufweist. Ist die Tiefe zu groß, fehlt es an der notwendigen Haltekraft, ist sie zu klein, leidet die Optik an der Verbindungsstelle.

Auch aus der DE 10 2015 016 957 A1 ist ein Verfahren zum Fügen mindestens zweier aufeinander aufliegender Bleche mit einer variablen Gesamtdicke mittels einer Clinchvorrichtung bekannt, die zumindest einen Stempel und eine koaxial hierzu angeordnete Matrize aufweist, und zumindest der Stempel über eine elektronische Steuerung ansteuerbar in einer axialen Richtung relativ zur Matrize verfahrbar angeordnet ist, wobei die beiden Bleche in einer Ebene zwischen dem Stempel und der Matrize angeordnet sind, und die zum Fügen der Bleche notwendige Durchsetztiefe einstellbar ist, wobei vor dem Fügen der Bleche mit Hilfe der Steuerung die aktuelle Gesamtdicke ermittelt und in Abhängigkeit der Gesamtdicke die Durchsetztiefe eingestellt wird, wobei jeweils Durchsetztiefe einer Gesamtdicke oder einem Gesamtdickenbereich zugeordnet wird und der Stempel axial aus einer ersten Nullage in Lage verfahren wird, an der er an der Oberseite des ersten Blechs anliegt. Die zur Ausführung des Verfahrens bekannte Fügevorrichtung löst das vorgenannte Problem durch einen im Grundkörper verschiebbar gelagerten Amboss, der in unterschiedlichen Stellungen fixierbar ausgebildet sein soll, damit die Matrize unterschiedlich tief ausgebildet ist. Wie eine variable Einstellung der Matrizentiefe und die Fixierung des Ambosses realisiert werden kann, ist in diesem Dokument jedoch nicht erläutert.

Aus der US 2001/0002506 A1 sind eine Vorrichtung und ein Verfahren zum mechanischen Verbinden von Metallblechen bekannt, die zur Automatisierung der Produktion verwendet werden können und Sensoren und Aktuatoren vorhanden sind, mit denen diverse Prozessparameter, u.a. unterschiedliche Blechdicken, gespeichert werden können.

Mit einer Clinchvorrichtung, bei der die Durchsetztiefe einstellbar ist, können Bleche mit einer variablen Dicke gefügt werden. Es können also unterschiedlich dicke Bleche mit derselben Vorrichtung gefügt werden, wenn die Durchsetztiefe an die jeweilige Gesamtdicke der aufeinander liegenden Bleche angepasst wird. Die Einstellung der Durchsetztiefe muss von dem Maschinenbediener vorgenommen werden. Wird die Durchsetztiefe nicht richtig eingestellt, ergibt sich dasselbe Problem, das auch an Vorrichtungen entsteht, bei denen die Matrize ein vorgegebenes Volumen hat. Ist die Durchsetztiefe im Hinblick auf die Gesamtdicke der beiden Bleche zu groß eingestellt, fehlt es an der notwendigen Haltekraft, ist die Fügetiefe zu klein eingestellt, leidet die Optik an der Verbindungsstelle. Im schlechtesten Fall ist es sogar nicht ausgeschlossen, dass es zu einer Beschädigung der Vorrichtung kommt.

Ein ähnliches Problem besteht auch allein dadurch, dass Schwankungen in der Blechdicke nicht ausgeschlossen werden können. Obwohl derselbe Typ Bleche über einen längeren Zeitraum verarbeitet wird, ist die Gesamtdicke der aufeinander liegenden Bleche Toleranzschwankungen unterlegen. Addieren sich die Dickentoleranzen der beiden Bleche, wäre es unter Umständen sinnvoller, die Durchsetztiefe zu vergrößern, um eine sichere Fügeverbindung zu erhalten. Um solche Toleranzschwankungen zu erkennen, bedarf es allerding eines äußerst erfahrenen und aufmerksamen Maschinenführers.

Hiervon ausgehend liegt der Erfindung die Aufgabe zugrunde, das eingangs beschriebene Verfahren so zu verbessern, dass eine gute Fügeverbindung an Blechen mit einer variablen Gesamtdicke hergestellt werden und die Prozesssicherheit unabhängig von der Erfahrung des Maschinenführers gewährleistet ist.

Die Lösung dieses Problems erfolgt durch ein Verfahren nach Anspruch 1, Anspruch 2 oder Anspruch 9.

Durch diese Ausgestaltung passt das Volumen der Matrize immer zu dem Volumen des verdrängten Materials, so dass eine sichere Verbindung erfolgt und eine Beschädigung der Vorrichtung ausgeschlossen ist, weil das Volumen der Matrize niemals kleiner sein wird als das zu verdrängende Volumen.

Die Durchsetztiefe kann stufenlos oder in Stufen eingestellt werden.

Die Ermittlung der Gesamtdicke und die Einstellung der Durchsetztiefe wird mit folgenden Schritten erreicht:
1. Speichern einer Mehrzahl unterschiedlicher Gesamtdicken oder Gesamtdickenbereiche der Steuerung ,
2. Zuordnen jeweils einer Durchsetztiefe zu einer Gesamtdicke oder zu einem Gesamtdickenbereich und anschließendem
3. Kalibrieren der Clinchvorrichtung,
4. Positionieren der Clinchvorrichtung bezüglich der zu fügenden Bleche derart, dass die Matrize an der Unterseite des zweiten Blechs anliegt,
5. axiales Verfahren des Stempels in eine Lage, in der der Stempel an der Oberseite des ersten Blechs anliegt,
6. Ermitteln des zurückgelegten Wegs des Stempels,
7. Bestimmen der Gesamtdicke aus dem zurückgelegten Weg des Stempels und der kalibrierten Nulllage der Matrize,
8. Vergleichen der bestimmten Gesamtdicke mit den gespeicherten Gesamtdicken oder Gesamtdickenbereichen,
9. Auswählen des der bestimmten Gesamtdicke zugeordneten Werts für die Durchsetztiefe,
10. Einstellen der Durchsetztiefe in Abhängigkeit von dem vorgenommenen Vergleich und
11. Fügen der beiden Bleche mit der eingestellten Durchsetztiefe. Wobei natürlich die notwendig verbleibende Bodendicke berücksichtigt werden muss.
   oder
   1. Speichern einer Mehrzahl unterschiedlicher Gesamtdicken oder Gesamtdickenbereiche in der Steuerung,
   2. Zuordnen jeweils einer Durchsetztiefe zu einer Gesamtdicke oder zu einem Gesamtdickenbereich,
   3. axiales Verfahren des Stempels aus einer ersten Nulllage in eine Lage, in der der Stempel an der Oberseite des ersten Bleches anliegt,
   4. Ermitteln des zurückgelegten Wegs des Stempels,
   5. axiales Verfahren der Matrize aus einer zweiten Nulllage in eine Lage, in der die Matrize an der Unterseite des zweiten Bleches anliegt,
   6. Ermitteln des von der Matrize zurückgelegten Wegs,
   7. Ermitteln der Gesamtdicke aus dem Abstand zwischen der ersten Nulllage und der zweiten Nulllage und den zurückgelegten Wegen von Stempel und Matrize,
   8. Vergleichen der ermittelten Gesamtdicke mit den gespeicherten Gesamtdicken oder Gesamtdickenbereichen,
   9. Auswählen des der ermittelten Gesamtdicke zugeordneten Wert für die Durchsetztiefe,
   10. Einstellen der Durchsetztiefe in Abhängigkeit von dem vorgenommenen Vergleich und
   11. Fügen der beiden Bleche mit der eingestellten Durchsetztiefe.

Zur Kalibrierung der Clinchvorrichtung wird der Stempel vorzugsweise aus einer Nulllage in axialer Richtung bis zur Anlage an die Matrize verfahren und der zurückgelegte Weg des Stempels dann die Nulllage der Matrize definiert, die in der Steuerung abgespeichert wird.

Zur Einstellung der Durchsetztiefe ist bevorzugt ein konzentrisch in der Matrize angeordneter Amboss vorgesehen, der in axialer Richtung relativ zur Matrize verschiebbar angeordnet ist. Der Amboss wird über ein Stellmittel angetrieben, das entweder keilförmig oder abgestuft ausgebildet ist. Ist das Stellmittel keilförmig ausgebildet, kann die Durchsetztiefe stufenlos eingestellt werden, ist das Stellmittel abgestuft ausgebildet, erfolgt die Einstellung der Durchsetztiefe in entsprechenden Stufen.

Mit Hilfe einer Zeichnung soll die Erfindung nachfolgend näher beschrieben werden. Es zeigen:
- Figur 1 -: die Teildarstellung einer Durchsetzfügevorrichtung in Ausgangsstellung im Längsschnitt;
- Figur 2 -: eine vergrößerte Teildarstellung aus Figur 1;
- Figur 3 -: eine Einzelheit aus Figur 2;

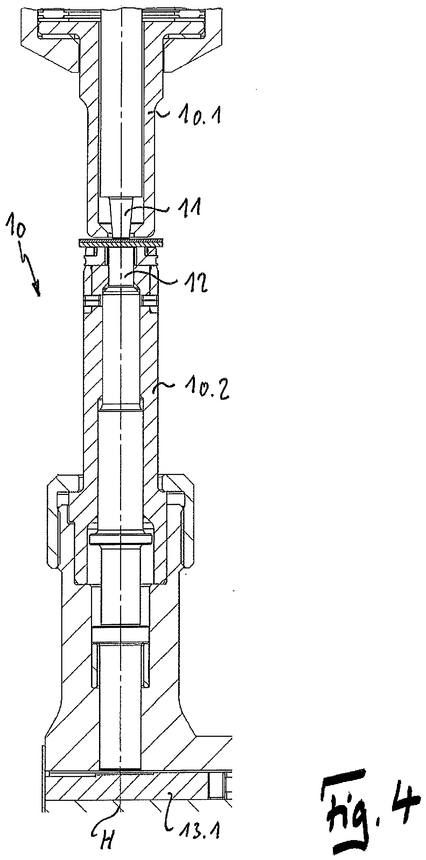

- Figur 4 -: die Darstellung nach Figur 1 in Messposition;

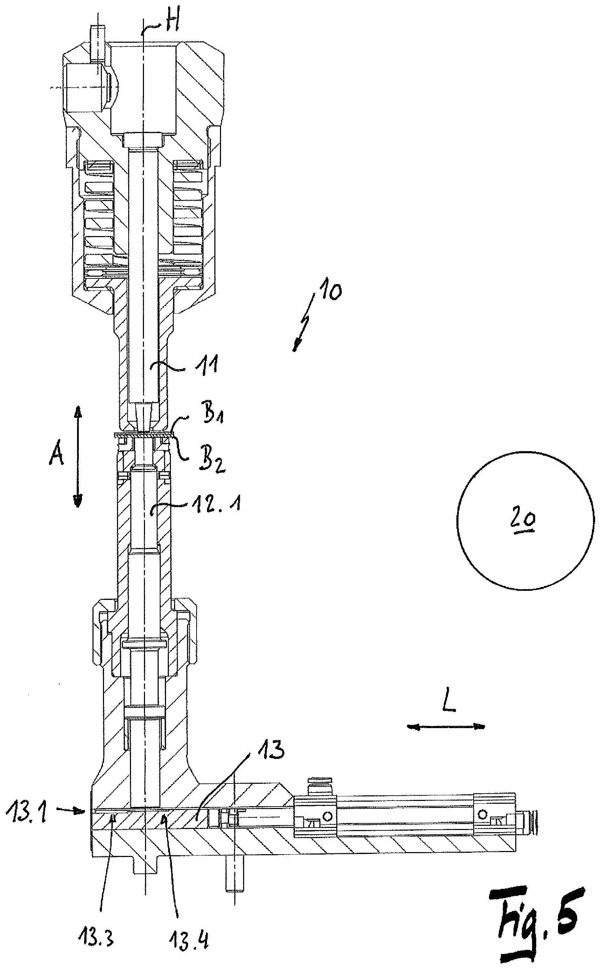

- Figur 5 -: eine vergrößerte Teildarstellung aus Figur 4;

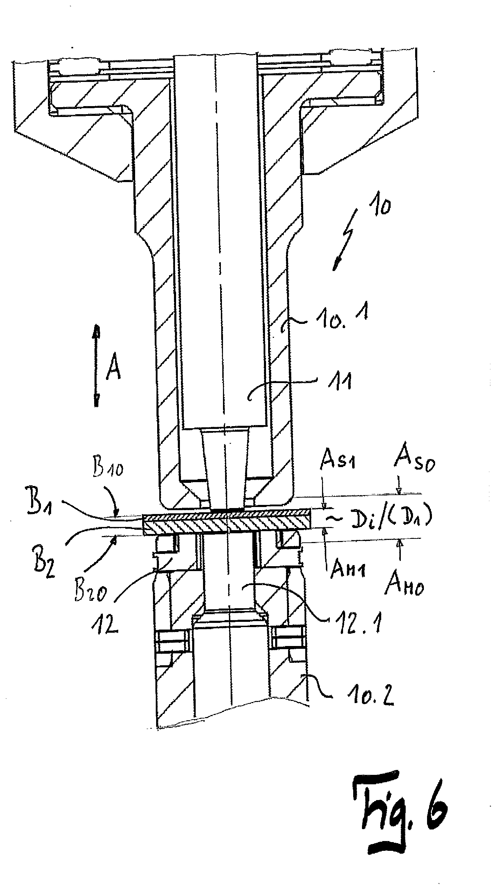

- Figur 6 -: eine Einzelheit aus Figur 5;

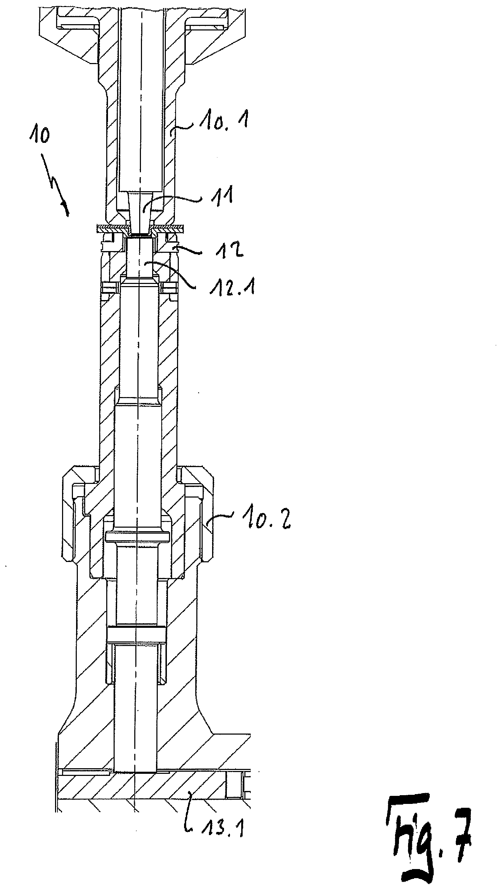

- Figur 7 -: die Darstellung nach Figur 1 nach erfolgtem Durchsetzfügen;

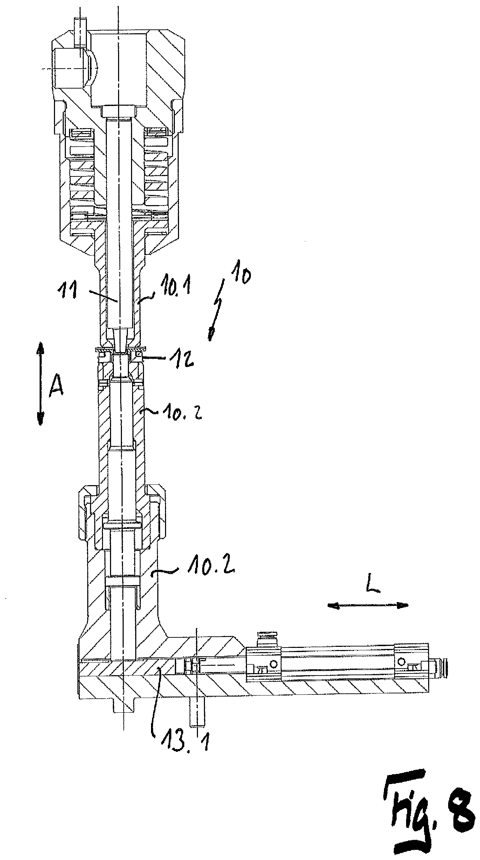

- Figur 8 -: eine vergrößerte Teildarstellung aus Figur 7;

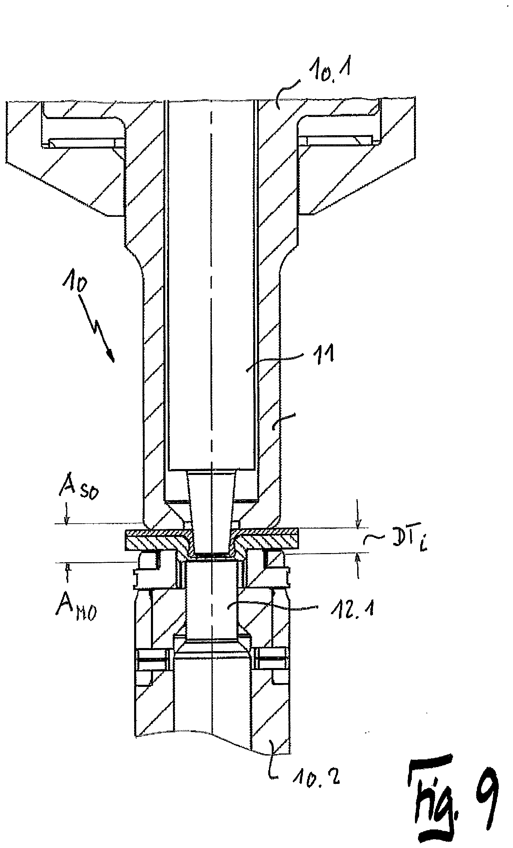

- Figur 9 -: eine Einzelheit aus Figur 8;
- Figur 10 -: eine erste Ausführungsform einer Matrize im Längsschnitt;
- Figur 11 -: eine vergrößerte Darstellung aus Figur 10;
- Figur 12 -: den Schnitt entlang der Linie XII-XII nach Figur 10;
- Figur 13 -: eine Matrize mit darüber angeordnetem Stempel im Querschnitt;
- Figur 14a -: die Darstellung nach Figur 13 vor einem Fügevorgang mit einer ersten Fügeaufgabe;
- Figur 14b -: die Darstellung nach Figur 14a nach dem Fügevorgang;
- Figur 14c -: eine vergrößerte Einzelheit nach Figur 14a.

Die zu fügenden Bleche B₁, B₂ werden aufeinander liegend zwischen den oberen Werkzeugträger 10.1 und den unteren Werkzeugträger 10.2 eines Durchsetzfügewerkzeuges 10 der bekannten Art eingelegt. Im oberen Werkzeugträger 10.1 ist ein Stempel 11 in axialer Richtung A verschiebbar gelagert. Im unteren Werkzeugträger 10.2 ist die Matrize 12 mit dem konzentrisch hierzu angeordneten Amboss 12.1 vorgesehen. Mit 20 ist eine elektronische Steuerung angedeutet, über die die Durchsetzfügevorrichtung 10 und deren einzelnen Komponenten gesteuert werden. Der Antrieb des Ambosses 12.1 erfolgt über das in seiner Längsrichtung L verschiebbar angeordnete Stellelement 13, das im Querschnitt eine stufenförmige Ausbildung haben kann, wie mit 13.1 angedeutet ist, oder im Querschnitt keilförmig ausgebildet sein.

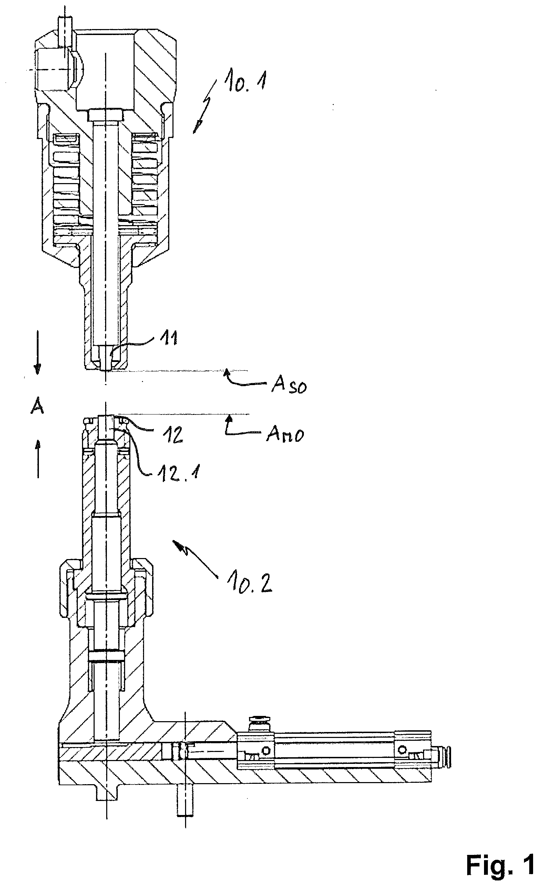

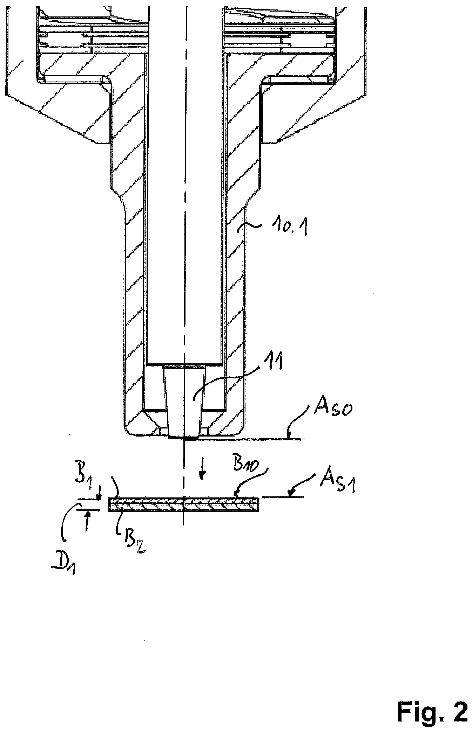

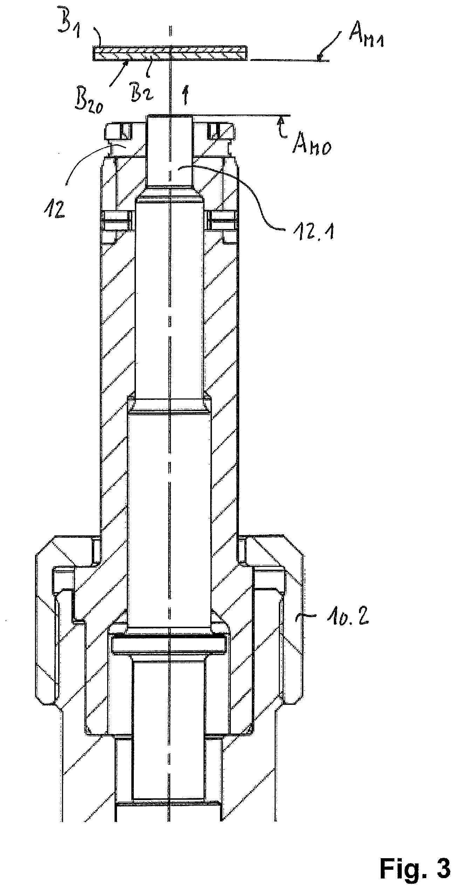

Die Ausgangsstellung der Durchsetzfügevorrichtung 10 ist in den Figuren 1 bis 3 dargestellt. Der Stempel 11 und die Matrize 12 befinden sich in ihren jeweiligen Nulllagen A_{S0}, A_{M0}. Nachdem die Bleche B₁, B₂ in eine Ebene zwischen dem oberen Werkzeugträger 10.1 und dem unteren Werkzeugträger 10.2 gebracht wurden, werden der Stempel 11 und die Matrize 12 in Axialrichtung A soweit verfahren, bis der Stempel 11 an der Oberseite B₁₀ des Blechs B₁ und die Matrize 12 an der Unterseite B₂₀ des zweiten Bleches B₂ anliegen und sich Stempel 11 und Matrize 12 dann in ihren Messlagen A_{S1}, A_{M1} befinden. Die Gesamtdicke D₁ von erstem Blech B₁ und zweitem Blech B₂ entspricht in dieser Stellung dem Abstand zwischen dem Stempel 11 und der Matrize 12.

Die Durchsetztiefe DTᵢ muss grundsätzlich kleiner sein als die Gesamtdicke Dᵢ der Bleche B₁, B₂. Sie ergibt sich durch den Weg des Stempels 11 in die Matrize 12 hinein und das durch den Hohlraum 12.3 gebildete Volumen innerhalb der Matrize 12, das durch den in axialer Richtung A verschiebbaren Amboss 12.1 variabel ist.

In der Steuerung 20 können verschiedene Gesamtdicken oder Gesamtdickenbereiche Dᵢ für verschiedene miteinander zu verbindende Bleche B₁, B₂ gespeichert werden. Dickenbereiche Dᵢ können die Blechdicke ± einer vorgegebenen Toleranz umfassen oder unterschiedliche Blechdicken ohne Toleranz.

Die Gesamtdicke D₁ lässt sich dem fest vorgegebenen Abstand in der Nulllage von Stempel 11 und Matrize 12 und dem zurückgelegten Weg des Stempels 11 aus seiner Nulllage A_{S0} und seiner Messlage A_{S1} bzw. dem zurückgelegten Weg der Matrize 12 aus ihrer Nulllage A_{M0} in ihre Messlage A_{M1} errechnen.

Ist die Gesamtdicke D₁ der Bleche B₁, B₂ wie vorstehend ermittelt worden, wird dieser Wert mit den in der Steuerung 20 gespeicherten Werten Dᵢ verglichen und die Durchsetztiefe DTᵢ, die in der Steuerung 20 dem entsprechenden Wert zugeordnet ist, eingestellt, indem der Amboss 12.1 in axialer Richtung A von der Unterseite B₂₀ des zweiten Blechs 2 in das Innere der Matrize 12 hineinverschoben wird. Ist diese Durchsetztiefe DTᵢ eingestellt, wird der Stempel 11 in Richtung der Matrize 12 verschoben und die beiden Bleche B₁, B₂ werden ineinander gefügt und somit verbunden.

Die Ermittlung der Gesamtdicke Dᵢ erfolgt vor jedem Fügevorgang der neu eingelegten Bleche B₁, B₂ und dient der Prozessüberwachung. Solange die Gesamtdicke Dᵢ einem tolerierbaren Bereich liegt, erfolgt keine Verstellung der Durchsetztiefe DTᵢ. Wenn die Durchsetztiefe DT stufenlos einstellbar ist, kann vorgesehen sein, dass die Steuerung 20 die Durchsetztiefe DTᵢ für jeden Fügevorgang individuell durch Verschieben des Ambosses 12.1 in axialer Richtung A einstellt.

Eine alternative Möglichkeit die Gesamtdicke Dᵢ der beiden Bleche B₁, B₂ zu ermitteln ist die folgende:
Bevor die beiden Bleche B₁, B₂ eingelegt werden, wird der Stempel 11 soweit in axialer Richtung A auf die Matrize 12 verschoben, bis er direkten Kontakt mit dem Amboss 12.1 hat. Der zurückgelegte Weg des Stempels 11 definiert dann die Nulllage A_{MO} (Figur 1) der Matrize 12, die in der Steuerung 20 abgespeichert wird. Die Bleche B₁, B₂ werden in eine Ebene zwischen der Matrize 12 und dem Stempel 11 gelegt.

Dann wird die Clinchvorrichtung 10 bezüglich der zu fügenden Bleche B₁, B₂ derart positioniert, dass die Matrize 12 an der Unterseite B₂₀ des zweiten Blechs B₂ anliegt. Der Stempel 11 wird soweit in axialer Richtung A verschoben, bis er an der Oberseite B₁₀ des ersten Blechs B₁ anliegt. Der zurückgelegte Weg des Stempels 11 wird dann ermittelt und aus dem zurückgelegten Weg des Stempels 11 und der kalibrierten Nulllage A_{MO} der Matrize 12 die Gesamtdicke Dᵢ der beiden Bleche B₁, B₂ ermittelt. Auch in diesem Fall gilt, dass eine Mehrzahl von Durchsetztiefen DTᵢ in der Steuerung 20 zuvor gespeichert wurden. Die bestimmte Gesamtdicke D₁ wird dann mit den gespeicherten Gesamtdicken oder Gesamtdickenbereichen Dᵢ verglichen und der der bestimmten Gesamtdicke D₁ zugeordnete Wert für die Durchsetztiefe DT₁ ausgewählt und der Clinchvorgang dann gestartet.

### Erstes Ausführungsbeispiel:

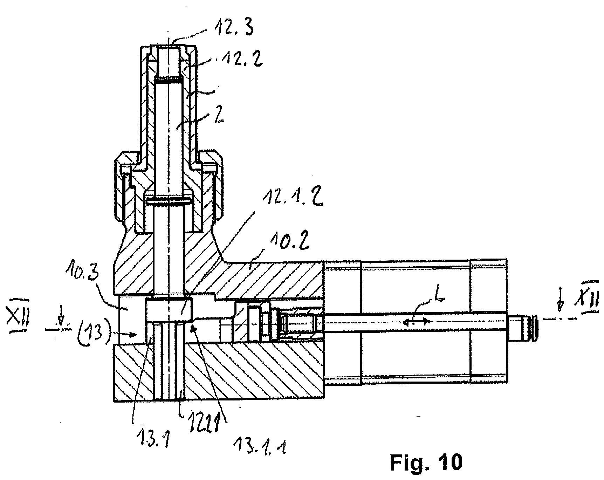

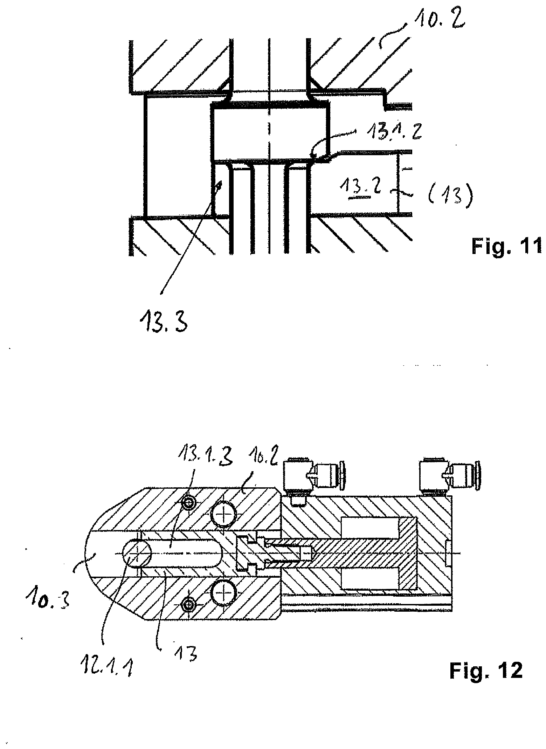

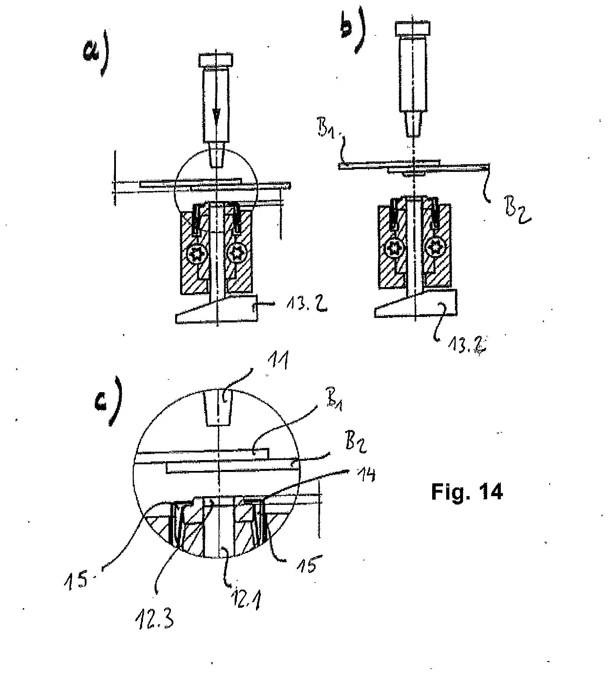

Bei dem in Figuren 10 und 14 mehr schematisch dargestellten ersten Ausführungsbeispiel besteht die Matrize 12 hauptsächlich aus dem Grundkörper 12.2 und dem hierin verschiebbar gelagerten und in mindestens zwei Stellungen fixierbaren Amboss 12.1, die zusammen einen Hohlraum 12.3 ausbilden, in den hineingefügt wird. Der Grundkörper 12.2 der Matrize 12 ist im unteren Werkzeugträger 10.2 befestigt. Quer zur Fügerichtung (=axiale Richtung A) ist ein Stellelement 13 vorgesehen, das von einem gestuften Stellschieber 13.1 gebildet wird, der in einer im unteren Werkzeugträger 10.2 vorgesehenen Ausnehmung 10.3 in Längsrichtung L gleitend geführt ist. Die Ausnehmung 10.3 ist im einfachsten Fall als Durchgangsbohrung ausgestaltet. Bei einem zweiteiligen Werkzeugträger 10.2 wird sie durch zwei gegenüberliegende Nuten gebildet. Der Antrieb des Stellschiebers 13.1 erfolgt elektromotorisch, hydraulisch oder pneumatisch. Der Stellschieber 13.1 ist mittig mit einem Schlitz 13.1.1 versehen, den der Amboss 12.1 mit seinem unteren Ende 12.1.1 durchgreift und in einer im unteren Werkzeughalter 10.2 vorgesehenen, in Fügerichtung verlaufenden Bohrung gelagert ist. Zur besseren Führung im Schlitz 13.1.1 ist das untere Ende 12.1.1 des Ambosses 12.1 diametral abgeflacht, wie in Figur 11 ersichtlich ist. Der Stellschieber 13.1 ist mit einer Stufe 13.1.1 ausgebildet, die durch eine Fase 13.1.2 realisiert wird und somit einen ersten, in Fügerichtung dünneren Bereich, mit der eine erste, größere Durchsetztiefe DT der Matrize 12 eingestellt wird, und einem zweiten, in Fügerichtung dickeren Bereich, mit dem eine zweite, kleinere Durchsetztiefe eingestellt wird. Der Hohlraum 12.3 wird also vergrößert oder verkleinert. Durch Verschieben des Stellschiebers 13.1 in Längsrichtung L liegt der ringförmige Wulst 12.1.2 des Ambosses 12.1 entweder auf dem ersten Bereich 13.3, wodurch sich eine größere Durchsetztiefe DT einstellt oder dem zweiten Bereich 13.4 auf, wodurch sich eine kleinere Durchsetztiefe DT einstellt und stützt sich über den Stellschieber 13.1 im Werkzeugträger 10.2 ab. Um mehr als zwei Durchsetztiefen DT einstellen zu können, können weitere Stufen in dem Stellschieber 13.1 vorgesehen werden. Der Winkel der Fase 13.1.2 wird so gewählt, dass der Wulst 12.1.2 leicht über die Stufe 13.1.1 herauf bzw. herabgleiten kann. Es ist nicht zwingend notwendig, den Stellschieber 13.1 zu schlitzen. Das untere Ende des Ambosses 12.1 könnte auch durch den ringförmigen Wulst 12.1.2 gebildet werden, der dann einen Flansch ausbildet, der auf dem Stellschieber 13.1 aufliegt, wenn die Führung des Ambosses 12.1 im oberen Teil des Werkzeugträgers 10.2 ausreichend ist und eine zusätzliche Abstützung im unteren Bereich nicht notwendig erscheint. Für diesen Fall kann der Stellschieber 13.1 ohne Schlitz ausgebildet sein.

Die Matrize 12 kann aus mehreren Matrizensegmenten 12a, 12b bestehen, wie sie zum zweiten Ausführungsbeispiel beschrieben werden. Auch die dortigen weiteren Bauelemente können auch bei der Matrize nach diesem ersten Ausführungsbeispiel Verwendung finden. Ausgetauscht wird nur das Stellmittel 13.

### Zweites Ausführungsbeispiel:

Die Matrize 12 besteht aus dem Grundkörper 12.2, dem hierin verschiebbar gelagerten und den unterschiedlichen Stellungen fixierbaren Amboss 12.1, den sich gegenüberliegenden Matrizensegmenten 12a, 12b, die in einer im Querschnitt im Wesentlichen rechteckigen und nach oben offenen am Grundkörper 12.2 befestigten Mantelhülse 14 gelagert sind und dem Werkzeugträger 10.2, in dem der Grundkörper 12.2 mittels der Schrauben 16 befestigt ist. Die Matrizensegmente 12a, 12b sind quer zur Fügerichtung gegen die Kraft von Blattfedern 15 verschiebbar im Grundkörper 12.2 gelagert.

Die Matrizensegmente 12a, 12b bilden zusammen mit dem oberen Ende des Ambosses 12.1 einen Hohlraum 12.3 aus, in den hineingefügt wird. Zur Veränderung der Tiefe des Hohlraumes 12.3 kann die Lage des Ambosses 12.1 im Grundkörper 12.2 stufenlos verändert und jeweils ortsfest fixiert werden. Hierzu ist ein Fremdkraft betätigter Keil 13.2 vorgesehen, der ebenfalls quer zur Hochachse H (= Fügerichtung) verschiebbar angeordnet ist. Neben der Stellbewegung übt der Keil 13.2 auf den Amboss 12.1 auch eine Lagerkraft aus, die die beim Fügen notwendige Haltekraft bestimmt.

Der Keil 13.2 ist vorzugsweise selbsthemmend ausgestaltet, um die notwendigen Haltekräfte aufnehmen zu können. Sein Antrieb ist beliebig. Vorzugsweise hydraulisch oder pneumatisch. Denkbar ist auch ein Antrieb über einen Schrittmotor oder ein Hebelwerk.

In der in Figur 14 dargestellten Stellung ist der Amboss 12.1 weit nach oben gefahren, sodass sich zum Fügen dünner Bleche B₁, B₂ ein kleiner Hohlraum 12.3 ausbildet. Zum Fügen sind die Bleche B₁, B₂ an der Matrize 12 angelegt und der Stempel 11 wird in Richtung der Matrize 12 bewegt. Dabei wird das Material der Bleche B₁, B₂ in den Hohlraum 12.3 hinein verformt, wobei die Matrizensegmente 12a, 12b gegen die Kraft der Blattfedern 15 quer zur Hochachse (H) verlagert werden, wodurch sich der Hohlraum 12.3 in radialer Richtung vergrößert. Selbstverständlich kann die Matrize 12 auch nur ein einziges Matrizenelement oder mehrere unverschiebliche Matrizensegmente aufweisen.

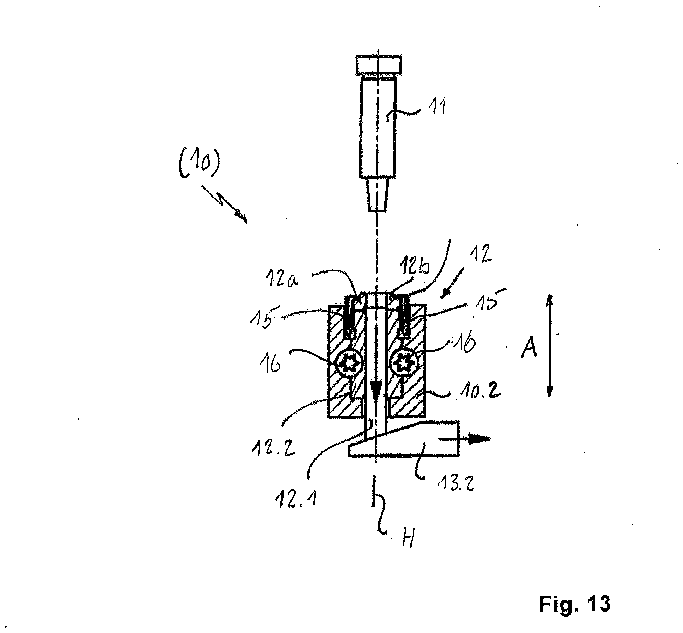

Bei der in Figur 13 dargestellten Fügeaufgabe sollen dickere Bleche B₁, B₂ miteinander verbunden werden. Der Keil 13.2 wird hierzu (auf der Zeichnung) nach rechts verschoben, wodurch der Amboss 12.1 nach unten verlagert wird und sich ein größerer Hohlraum 12.3 ausbildet. Das Fügen erfolgt wie zuvor beschrieben. Anstatt die überlappten Bleche B₁, B₂ durch clinchen miteinander zu verbinden, können sie auch durch Halbhohl- Stanznieten verbunden werden. In den Hohlraum 12.3 wird dann ein hier nicht dargestellter Niet eingepresst.

Die zu diesem Ausführungsbeispiel erfolgten Erläuterungen können analog auch für das erste Ausführungsbeispiel gelten, wenn der Keil 13.2 durch den Stellschieber 13.1 ersetzt wird (und umgekehrt).

### Bezugszeichenliste

- 10: Clinchvorrichtung
- 10.1: Werkzeugträger
- 10.2: Werkzeugträger
- 10.3: Ausnehmung
- 11: Stempel
- 12: Matrize
- 12.1: Amboss
- 12.1.2: Wulst
- 12.2: Grundkörper
- 12.3: Hohlraum
- 12a, b: Matrizensegment
- 13: Stellmittel
- 13.1: Stellschieber
- 13.1.1: Stufe
- 13.1.2: Fase
- 13.1.3: Schlitz
- 13.2: Keil
- 13.3: erster Bereich
- 13.4: zweiter Bereich
- 14: Mantelhülse
- 15: Blattfeder
- 16: Schraube
- 20: elektronische Steuerung
- A: axiale Richtung
- A_{S0}: ersten Nulllage
- A_{S1}: Messlage
- A_{M0}: zweiten Nulllage
- A_{M1}: Messlage
- B₁, B₂: Bleche
- B₁₀: Oberseite
- B₂₀: Unterseite
- Dᵢ: Gesamtdicke / Gesamtdickenbereich
- D₁: aktuelle Gesamtdicke
- DTᵢ: Durchsetztiefe
- DT₁: aktuelle Durchsetztiefe
- H: Hochachse
- L: Längsrichtung

## Patentansprüche

1. Verfahren zum Fügen mindestens zweier aufeinander aufliegender Bleche (B₁, B₂) mit einer variablen Gesamtdicke (Dᵢ) mittels einer Clinchvorrichtung (10), die zumindest einen Stempel (11) und eine koaxial hierzu angeordnete Matrize (12) aufweist, und zumindest der Stempel (11) über eine elektronische Steuerung (20) ansteuerbar in einer axialen Richtung (A) relativ zur Matrize (12) verfahrbar angeordnet ist, wobei die beiden Bleche (B₁, B₂) in einer Ebene zwischen dem Stempel (11) und der Matrize (12) angeordnet sind, und die zum Fügen der Bleche (B₁, B₂) notwendige Durchsetztiefe (DT) einstellbar ist, wobei vor dem Fügen der Bleche (B₁, B₂) mit Hilfe der Steuerung (20) die aktuelle Gesamtdicke (D₁) ermittelt und in Abhängigkeit der Gesamtdicke (D₁) die Durchsetztiefe (DT₁) eingestellt wird mit folgenden Schritten:
1.1 Speichern einer Mehrzahl unterschiedlicher Gesamtdicken oder Gesamtdickenbereiche (Dᵢ) in der Steuerung (20),
1.2 Zuordnen jeweils einer Durchsetztiefe (DTᵢ) zu einer Gesamtdicke oder zu einem Gesamtdickenbereich (Dᵢ),
1.3 Kalibrieren der Clinchvorrichtung (10),
1.4 Positionieren der Clinchvorrichtung (10) bezüglich der zu fügenden Bleche (B₁, B₂) derart, dass die Matrize (12) an der Unterseite (B₂₀) des zweiten Blechs (B₂) anliegt,
1.5 axiales Verfahren des Stempels in eine Lage (A_{S1}), in der der Stempel (11) an der Oberseite (B₁₀) des ersten Blechs (B₁) anliegt,
1.6 Ermitteln des zurückgelegten Wegs des Stempels (11),
1.7 Bestimmen der Gesamtdicke (D₁) aus dem zurückgelegten Weg des Stempels (11) und der kalibrierten Nulllage der Matrize (12),
1.8 Vergleichen der bestimmten Gesamtdicke (D₁) mit den gespeicherten Gesamtdicken oder Gesamtdickenbereichen (Dᵢ),
1.9 Auswählen des der bestimmten Gesamtdicke (D₁) zugeordneten Werts für die Durchsetztiefe (DT),
1.10 Einstellen der Durchsetztiefe (DT) in Abhängigkeit von dem vorgenommenen Vergleich und
1.11 Fügen der beiden Bleche (B₁, B₂) mit der eingestellten Durchsetztiefe (DT).

2. Verfahren zum Fügen mindestens zweier aufeinander aufliegender Bleche (B₁, B₂) mit einer variablen Gesamtdicke (Dᵢ) mittels einer Clinchvorrichtung (10), die zumindest einen Stempel (11) und eine koaxial hierzu angeordnete Matrize (12) aufweist, und zumindest der Stempel (11) über eine elektronische Steuerung (20) ansteuerbar in einer axialen Richtung (A) relativ zur Matrize (12) verfahrbar angeordnet ist, wobei die beiden Bleche (B₁, B₂) in einer Ebene zwischen dem Stempel (11) und der Matrize (12) angeordnet sind, und die zum Fügen der Bleche (B₁, B₂) notwendige Durchsetztiefe (DT) einstellbar ist, wobei vor dem Fügen der Bleche (B₁, B₂) mit Hilfe der Steuerung (20) die aktuelle Gesamtdicke (D₁) ermittelt und in Abhängigkeit der Gesamtdicke (D₁) die Durchsetztiefe (DT₁) eingestellt wird, mit folgenden Schritten:
2.1 Speichern einer Mehrzahl unterschiedlicher Gesamtdicken oder Gesamtdickenbereiche (Dᵢ) in der Steuerung (20),
2.2 Zuordnen jeweils einer Durchsetztiefe (DT₁) zu einer Gesamtdicke oder zu einem Gesamtdickenbereich (Dᵢ),
2.3 axiales Verfahren des Stempels (11) aus einer ersten Nulllage (A_{S0}) in eine Lage (A_{S1}), in der der Stempel (11) an der Oberseite (B₁₀) des ersten Bleches (B₁) anliegt,
2.4 Ermitteln des zurückgelegten Wegs des Stempels (11),
2.5 axiales Verfahren der Matrize (12) aus einer zweiten Nulllage (A_{M0}) in eine Lage (A_{M1}), in der die Matrize (12) an der Unterseite (B₂₀) des zweiten Bleches (B₂) anliegt,
2.6 Ermitteln des von der Matrize (12) zurückgelegten Wegs,
2.7 Ermitteln der Gesamtdicke (D₁) aus dem Abstand zwischen der ersten Nulllage (A_{S0}) und der zweiten Nulllage (A_{M0}) und den zurückgelegten Wegen von Stempel (11) und Matrize (12),
2.8 Vergleichen der ermittelten Gesamtdicke (D₁) mit den gespeicherten Gesamtdicken oder Gesamtdickenbereichen (Dᵢ),
2.9 Auswählen des der ermittelten Gesamtdicke (D₁) zugeordneten Wert für die Durchsetztiefe (DT),
2.10 Einstellen der Durchsetztiefe (DT) in Abhängigkeit von dem vorgenommenen Vergleich und
2.11 Fügen der beiden Bleche (B₁, B₂) mit der eingestellten Durchsetztiefe (DT).

3. Verfahren nach Anspruch 1, **dadurch gekennzeichnet, dass** zur Kalibrierung der Clinchvorrichtung (10) der Stempel (11) aus einer Nulllage (A_{S0}) in axialer Richtung bis zur Anlage an die Matrize (12) verfahren wird und der zurückgelegte Weg des Stempels (11) die Nulllage (A_{MO}) der Matrize (12) definiert, die in der Steuerung (20) abgespeichert wird.

4. Verfahren nach Anspruch 1 oder 2, **dadurch gekennzeichnet, dass** die Durchsetztiefe (DT) stufenlos einstellbar ist.

5. Verfahren nach Anspruch 1 oder 2, **dadurch gekennzeichnet, dass** die Durchsetztiefe (DT) in mindestens zwei Stufen einstellbar ist.

6. Verfahren nach einem der vorstehenden Ansprüche, **dadurch gekennzeichnet, dass** zur Einstellung der Durchsetztiefe (DT) ein konzentrisch in der Matrize (12) angeordneter Amboss (12.1) in axialer Richtung (A) relativ zu der Matrize (12) verschiebbar angeordnet ist.

7. Verfahren nach Ansprüche 4 und 6, **dadurch gekennzeichnet, dass** zur Verschiebung des Ambosses (12.1) ein Stellmittel (13) vorgesehen ist, das von einem Keil gebildet wird.

8. Verfahren nach Ansprüchen 5 und 6, **dadurch gekennzeichnet, dass** zur Verschiebung des Ambosses (12.1) ein Stellmittel (13) vorgesehen ist, das von einem Stellschieber (13.1) gebildet wird, der in seiner Längsrichtung (L) mindestens eine in der axialen Richtung (A) wirksame Stufe (12.1.1) aufweist, gebildet wird.

9. Verfahren zum Fügen mindestens zweier aufeinander aufliegender Bleche (B₁, B₂) mit einer variablen Gesamtdicke (Dᵢ) mittels einer Clinchvorrichtung (10), die zumindest einen Stempel (11) und eine koaxial hierzu angeordnete Matrize (12) aufweist, und zumindest der Stempel (11) über eine elektronische Steuerung (20) ansteuerbar in einer axialen Richtung (A) relativ zur Matrize (12) verfahrbar angeordnet ist, wobei die beiden Bleche (B₁, B₂) in einer Ebene zwischen dem Stempel (11) und der Matrize (12) angeordnet sind, und die zum Fügen der Bleche (B₁, B₂) notwendige Durchsetztiefe (DT) einstellbar ist, wobei vor dem Fügen der Bleche (B₁, B₂) mit Hilfe der Steuerung (20) die aktuelle Gesamtdicke (D₁) ermittelt und in Abhängigkeit der Gesamtdicke (D₁) die Durchsetztiefe (DT₁) eingestellt wird mit folgenden Schritten:
9.1 Speichern einer Mehrzahl unterschiedlicher Gesamtdicken oder Gesamtdickenbereiche (Dᵢ) in der Steuerung (20),
9.2 Zuordnen jeweils einer Durchsetztiefe (DTᵢ) zu einer Gesamtdicke oder zu einem Gesamtdickenbereich (Dᵢ),
9.3 Kalibrieren der Clinchvorrichtung (10), wobei
9.4 die Durchsetztiefe (DT) stufenlos einstellbar ist,
9.5 zur Einstellung der Durchsetztiefe (DT) ein konzentrisch in der Matrize (12) angeordneter Amboss (12.1) in axialer Richtung (A) relativ zu der Matrize (12) verschiebbar angeordnet ist,
9.6 zur Verschiebung des Ambosses (12.1) ein Stellmittel (13) vorgesehen ist, das von einem Keil gebildet wird.

## Claims

1. A method for joining at least two metal sheets (B₁, B₂) resting on one another with a variable total thickness (Dᵢ) by means of a clinching device (10) comprising at least one punch (11) and a die (12) arranged coaxially to said punch, and at least the punch (11) is arranged so as to be controllable by means of an electronic control unit (20) and movable in an axial direction (A) relative to the die (12), wherein the two metal sheets (B₁, B₂) are arranged in a plane between the punch (11) and the die (12), and the penetration depth (DT) necessary for joining the metal sheets (B₁, B₂) is adjustable, wherein before joining the metal sheets (B₁, B₂), the current total thickness (D₁) is determined with the aid of the control unit (20) and the penetration depth (DT₁) is set depending on the total thickness (Dᵢ), **characterized by** the following steps:
1.1 Storing a number of different total thicknesses or total thickness ranges (Dᵢ) in the control unit (20),
1.2 Assigning a penetration depth (DTᵢ) to a total thickness or to a total thickness range (Dᵢ),
1.3 Calibrating the clinching device (10)
1.4 Positioning of the clinching device (10) with respect to the sheets to be joined (B₁, B₂) to be joined in such a way that the die (12) rests against the underside (B₂₀) of the second sheet (B₂),
1.5 Axially moving the punch into a position (A_{S1}) in which the punch (11) rests against the upper side (B₁₀) of the first metal sheet (B₁),
1.6 Detecting the path covered by the punch (11),
1.7 Detecting the total thickness (D₁) from the path covered by the punch (11) and the calibrated zero position of the die (12),
1.8 Comparing the detected total thickness (D₁) with the stored total thicknesses or total thickness ranges (Dᵢ),
1.9 Selecting the value assigned to the detected total thickness (D₁) for the penetration depth (DT),
1.10 Adjusting the penetration depth (DT) depending on the comparison made, and
1.11 Joining the two metal sheets (B₁, B₂) with the set penetration depth (DT).

2. A method for joining at least two metal sheets (B₁, B₂) resting on one another with a variable total thickness (Dᵢ) by means of a clinching device (10) comprising at least one punch (11) and a die (12) arranged coaxially to said punch, and at least the punch (11) is arranged so as to be controllable by means of an electronic control unit (20) and movable in an axial direction (A) relative to the die (12), wherein the two metal sheets (B₁, B₂) are arranged in a plane between the punch (11) and the die (12), and the penetration depth (DT) necessary for joining the metal sheets (B₁, B₂) is adjustable, wherein before joining the metal sheets (B₁, B₂), the current total thickness (D₁) is determined with the aid of the control unit (20) and the penetration depth (DT₁) is set depending on the total thickness (Dᵢ), **characterized by** the following steps:
2.1 Storing a number of different total thicknesses or total thickness ranges (Dᵢ) in the control unit (20),
2.2 Assigning a penetration depth (DTᵢ) to a total thickness or to a total thickness range (Dᵢ),
2.3 Axially moving the punch (11) out of a first zero position into a position (A_{S0}) into a position (A_{S1}) in which the punch (11) rests against the upper side (B₁₀) of the first metal sheet (B₁),
2.4 Detecting the path covered by the punch (11),
2.5 Axially moving the die (12) out of a second zero position (A_{M0}) into a position (A_{M1}) in which the die (12) rests against the lower side (B₂₀) of the second metal sheet (B₂),
2.6 Detecting the path covered by the die (12),
2.7 Detecting the total thickness (D₁) from a distance between the first zero position (A_{S0}) and the second zero position (A_{M0}) and the paths covered by the punch (11) and die (12),
2.8 Comparing the detected total thickness (D₁) with the stored total thicknesses or total thickness ranges (Dᵢ),
2.9 Selecting the value assigned to the detected total thickness (D₁) for the penetration depth (DT),
2.10 Adjusting the penetration depth (DT) depending on the comparison made, and
2.11 Joining the two metal sheets (B₁, B₂) with the set penetration depth (DT).

3. The method according to claim 1, **characterized in that** to calibrate the clinching device (10), the punch (11) is moved from a zero position (A_{S0}) in the axial direction until it comes into contact with the die (12) and the path covered by the punch (11) then defines the zero position (A_{MO}) of the die (12), which is stored in the control unit (20).

4. The method according to claim 1 or 2, **characterized in that** the penetration depth (DT) is infinitely variable.

5. The method according to claim 1 or 2, **characterized in that** the penetration depth (DT) can be adjusted in at least two steps.

6. The method according to one of the preceding claims, **characterized in that** to adjust the penetration depth (DT), an anvil (12.1) is arranged concentrically in the die (12) and can be displaced in the axial direction (A) relative to the die (12).

7. The method according to claim 4 and 6, **characterized in that** an adjustment device (13) is provided to displace the anvil (12.1), said device being formed by a wedge.

8. The method according to claims 5 and 6, **characterized in that** an adjustment device (13) is provided to displace the anvil (12.1), said device being 30 formed by an adjustment slide (13.1) that in its longitudinal direction (L) comprises at least one effective step (12.1.1) in the axial direction (A).

9. Method for joining at least two metal sheets (B₁, B₂) resting on one other with a variable total thickness (Dᵢ) by means of a clinching device (10) comprising at least one punch (11) and a die (12) arranged coaxially to said punch, and at least the punch (11) is arranged so as to be controllable by means of an electronic control unit (20) and movable in an axial direction (A) relative to the die (12), wherein the two metal sheets (B₁, B₂) are arranged in a plane between the punch (11) and the die (12), and the penetration depth (DT) necessary for joining the metal sheets (B₁, B₂) is adjustable, wherein before joining the metal sheets (B₁, B₂), the current total thickness (D₁) is determined with the aid of the control unit (20) and the penetration depth (DT₁) is set depending on the total thickness (D₁) with the following steps:
9.1 Storing a plurality of different total thicknesses or total thickness ranges (Dᵢ) in the control unit (20),
9.2 Assigning a respective penetration depth (DTᵢ) to a total thickness or to a total thickness range (Dᵢ),
9.3 calibrating the clinching device (10), wherein
9.4 the penetration depth (DT) is continuously adjustable,
9.5 an anvil (12.1) arranged concentrically in the die (12) is arranged to be displaceable in the axial direction (A) relative to the die (12) in order to set the penetration depth (DT),
9.6 an adjusting means (13) formed by a wedge is provided for displacing the anvil (12.1.

## Revendications

1. Procédé d'assemblage d'au moins deux tôles superposées (B₁, B₂), ayant une épaisseur totale variable (Dᵢ), au moyen d'un dispositif de clinchage (10) qui comprend au moins un poinçon (11) et une matrice (12) disposée coaxialement à celui-ci, au moins le poinçon (11) étant disposé de manière à pouvoir être déplacé par rapport à la matrice (12) dans une direction axiale (A) en étant commandé par l'intermédiaire d'une commande électronique (20),
dans lequel
les deux tôles (B₁, B₂) sont disposées dans un plan entre le poinçon (11) et la matrice (12), et la profondeur de pénétration (DT) nécessaire à l'assemblage des tôles (B₁, B₂) est réglable,
l'épaisseur totale actuelle (D₁) est déterminée à l'aide de la commande (20) avant l'assemblage des tôles (B₁, B₂), et la profondeur de pénétration (DT₁) est réglée en fonction de l'épaisseur totale (D₁),
le procédé comprenant les étapes suivantes consistant à :
1.1 mémoriser une pluralité d'épaisseurs totales ou de plages d'épaisseurs totales différentes (Dᵢ) dans la commande (20),
1.2 attribuer une profondeur de pénétration (DTᵢ) respective à une épaisseur totale ou à une plage d'épaisseur totale (Dᵢ),
1.3 étalonner le dispositif de clinchage (10),
1.4 positionner le dispositif de clinchage (10) par rapport aux tôles (B₁, B₂) à assembler, de telle sorte que la matrice (12) s'applique contre la face inférieure (B₂₀) de la deuxième tôle (B₂),
1.5 déplacer axialement le poinçon vers une position (A_{S1}) dans laquelle le poinçon (11) s'applique contre la face supérieure (B₁₀) de la première tôle (B1),
1.6 déterminer le trajet parcouru par le poinçon (11),
1.7 déterminer l'épaisseur totale (D₁) à partir du trajet parcouru par le poinçon (11) et de la position zéro étalonnée de la matrice (12),
1.8 comparer l'épaisseur totale (D₁) déterminée aux épaisseurs totales ou aux plages d'épaisseurs totales (Dᵢ) mémorisées,
1.9 sélectionner la valeur de la profondeur de pénétration (DT) attribuée à l'épaisseur totale (D₁) déterminée,
1.10 régler la profondeur de pénétration (DT) en fonction de la comparaison effectuée, et
1.11 assembler les deux tôles (B₁, B₂) avec la profondeur de pénétration (DT) réglée.

2. Procédé d'assemblage d'au moins deux tôles superposées (B₁, B₂), ayant une épaisseur totale variable (Dᵢ), au moyen d'un dispositif de clinchage (10) qui comprend au moins un poinçon (11) et une matrice (12) disposée coaxialement à celui-ci, au moins le poinçon (11) étant disposé de manière à pouvoir être déplacé par rapport à la matrice (12) dans une direction axiale (A) en étant commandé par l'intermédiaire d'une commande électronique (20),
dans lequel
les deux tôles (B₁, B₂) sont disposées dans un plan entre le poinçon (11) et la matrice (12), et la profondeur de pénétration (DT) nécessaire à l'assemblage des tôles (B₁, B₂) est réglable,
l'épaisseur totale actuelle (D₁) est déterminée à l'aide de la commande (20) avant l'assemblage des tôles (B₁, B₂), et la profondeur de pénétration (DT₁) est réglée en fonction de l'épaisseur totale (D₁),
le procédé comprenant les étapes suivantes consistant à :
2.1 mémoriser une pluralité d'épaisseurs totales ou de plages d'épaisseurs totales différentes (Dᵢ) dans la commande (20),
2.2 attribuer une profondeur de pénétration (DTᵢ) respective à une épaisseur totale ou à une plage d'épaisseur totale (Dᵢ),
2.3 déplacer axialement le poinçon (11) d'une première position zéro (A_{S0}) à une position (A_{S1}) dans laquelle le poinçon (11) s'applique contre la face supérieure (B₁₀) de la première tôle (B₁),
2.4 déterminer le trajet parcouru par le poinçon (11),
2.5 déplacer axialement la matrice (12) d'une deuxième position zéro (A_{M0}) à une position (A_{M1}) dans laquelle la matrice (12) s'applique contre la face inférieure (B₂₀) de la deuxième tôle (B₂),
2.6 déterminer le trajet parcouru par la matrice (12),
2.7 déterminer l'épaisseur totale (D₁) à partir de la distance entre la première position zéro (A_{S0}) et la deuxième position zéro (A_{M0}) et à partir des trajets parcourus par le poinçon (11) et la matrice (12),
2.8 comparer l'épaisseur totale (D₁) déterminée aux épaisseurs totales ou aux plages d'épaisseurs totales (Dᵢ) mémorisées,
2.9 sélectionner la valeur de la profondeur de pénétration (DT) attribuée à l'épaisseur totale (D₁) déterminée,
2.10 régler la profondeur de pénétration (DT) en fonction de la comparaison effectuée, et
2.11 assembler les deux tôles (B₁, B₂) avec la profondeur de pénétration (DT) réglée.

3. Procédé selon la revendication 1,
**caractérisé en ce que**, pour étalonner le dispositif de clinchage (10), le poinçon (11) est déplacé dans la direction axiale à partir d'une position zéro (A_{S0}) jusqu'à ce qu'il s'applique contre la matrice (12), et le trajet parcouru par le poinçon (11) définit la position zéro (A_{M0}) de la matrice (12), qui est mémorisée dans la commande (20).

4. Procédé selon la revendication 1 ou 2,
**caractérisé en ce que** la profondeur de pénétration (DT) est réglable en continu.

5. Procédé selon la revendication 1 ou 2,
**caractérisé en ce que** la profondeur de pénétration (DT) est réglable en au moins deux étapes.

6. Procédé selon l'une des revendications précédentes,
**caractérisé en ce que**, pour régler la profondeur de pénétration (DT), une enclume (12.1) disposée de manière concentrique dans la matrice (12) est disposée de manière à pouvoir être déplacée par rapport à la matrice (12) dans la direction axiale (A).

7. Procédé selon les revendications 4 et 6,
**caractérisé en ce que**, pour déplacer l'enclume (12.1), il est prévu un moyen de réglage (13) qui est formé par une clavette.

8. Procédé selon les revendications 5 et 6,
**caractérisé en ce que**, pour déplacer l'enclume (12.1), il est prévu un moyen de réglage (13) qui est formé par un coulisseau de réglage (13.1) qui présente dans sa direction longitudinale (L) au moins un gradin (12.1.1) actif dans la direction axiale (A).

9. Procédé d'assemblage d'au moins deux tôles superposées (B₁, B₂), ayant une épaisseur totale variable (Dᵢ), au moyen d'un dispositif de clinchage (10) qui comprend au moins un poinçon (11) et une matrice (12) disposée coaxialement à celui-ci, au moins le poinçon (11) étant disposé de manière à pouvoir être déplacé par rapport à la matrice (12) dans une direction axiale (A) en étant commandé par l'intermédiaire d'une commande électronique (20),
dans lequel
les deux tôles (B₁, B₂) sont disposées dans un plan entre le poinçon (11) et la matrice (12), et la profondeur de pénétration (DT) nécessaire à l'assemblage des tôles (B₁, B₂) est réglable,
l'épaisseur totale actuelle (D₁) est déterminée à l'aide de la commande (20) avant l'assemblage des tôles (B₁, B₂), et la profondeur de pénétration (DT₁) est réglée en fonction de l'épaisseur totale (D₁),
le procédé comprenant les étapes suivantes consistant à :
9.1 mémoriser une pluralité d'épaisseurs totales ou de plages d'épaisseurs totales différentes (Dᵢ) dans la commande (20),
9.2 attribuer une profondeur de pénétration (DTᵢ) respective à une épaisseur totale ou à une plage d'épaisseur totale (Dᵢ),
9.3 étalonner le dispositif de clinchage (10), sachant que
9.4 la profondeur de pénétration (DT) est réglable en continu,
9.5 pour régler la profondeur de pénétration (DT), une enclume (12.1) disposée de manière concentrique dans la matrice (12) est disposée de manière à pouvoir être déplacée par rapport à la matrice (12) dans la direction axiale (A),
9.6 pour déplacer l'enclume (12.1), il est prévu un moyen de réglage (13) qui est formé par une clavette.
